# NEUE EUROPÄISCHE PATENTSCHRIFT

(11) **EP 1 282 846 B2**
(45) Veröffentlichungstag und Bekanntmachung des Hinweises auf die Entscheidung über den Einspruch: **24.10.2007**
(45) Hinweis auf die Patenterteilung: 24.03.2004
(21) Anmeldenummer: 01951343.1
(22) Anmeldetag: 21.05.2001
(51) Int. Cl.: G06F 1/00

(54) **SMARTCARDS ZUR AUTHENTISIERUNGSPRÜFUNG IN MASCHINENSTEUERUNGEN**
SMART CARDS FOR THE AUTHENTICATION IN MACHINE CONTROLS
CARTES INTELLIGENTES DESTINEES A L'AUTHENTIFICATION DANS DES COMMANDES DE MACHINES

(30) Priorität: 19.05.2000 DE 10025791
(43) Veröffentlichungstag der Anmeldung: 12.02.2003
(73) Patentinhaber: Rexroth Indramat GmbH, 97816 Lohr am Main (DE)
(72) Erfinder: ATZMÜLLER, Clemens, 97737 Gemünden (DE); MÜLLER, Werner, 97854 Steinfeld (DE); BRANDL, Thomas, 97816 Lohr am Main (DE)
(86) Internationale Anmeldenummer: PCT/DE2001/001906
(87) Internationale Veröffentlichungsnummer: WO 2001/088671

(56) Entgegenhaltungen:
- EP-A- 0 856 821
- DE-T2- 69 120 577
- DE-U- 29 604 605
- US-A- 4 196 476
- US-A- 5 404 288
- US-A- 5 616 894

## Beschreibung

Die Erfindung betrifft ein Verfahren und eine Steuerung zur Authentisierungsprüfung für den Zugang zu einer Maschinensteuerung, nämlich einer Werkzeugmaschinensteuerung oder Druckmaschinensteuerung oder dergleichen.

Gemäß internem Stand der Technik der Anmelderin ist es bekannt, eine Authentisierung beispielsweise mit herkömmlichen (mechanischen) Schlüsseln oder mit Codewörtem zu realisieren.

Ein ähnliches Verfahren ist außerdem aus der DE 691 20 577 T2 bekannt. Dieses Dokument beschreibt ein NC-Steuersystem. welches eine IC-Karte als tragbares Speichermedium verwendet (Seite 14, Zeile 30). Hinsichtlich der Autorisierung geht aus diesem Dokument ausschließlich hervor, dass die NC-Werkzeugmaschine nach Maßgabe eines auf der IC-Karte gespeicherten PIN-Codes entweder zum Betrieb freigegeben oder gesperrt wird. Dieses System dient ausschließlich der Arbeitsplanung und -Überwachung. Dies geht aus Seite 17, Zeilen 2-18 sowie Seite 18, Zeilen 13-29 hervor. Das genannte System ist unflexibel und starr, da es lediglich die Planung und Überprüfung der zu leistenden bzw. geleisteten Arbeit eines Maschinenbedieners erlaubt. Außerdem gestattet das System Manipulationen an der NC-Steuerung durch den Maschinenbediener, die eigentlich nicht autorisiert sein sollten, beispielsweise Programmänderungen etc, da ja bei Freigabe sämtliche Funktionen der Maschine verfügbar sind.
Die DE 296 04 605 U1 zeigt ein Verfahren nach dem Oberbegriff des Patentanspruchs 1.

Es ist demgegenüber Aufgabe der Erfindung, ein Verfahren bzw. eine Steuerung anzugeben, welche bei einer dezentralisierten Maschinensteuerung möglichst einfach, effizient und störungsunanfällig eine Authentisierungsprüfung erlaubt. Diese Aufgabe wird durch die Gegenstände des Anspruchs 1 und des Anspruchs 7 gelöst.

Eine Authentisierungsprüfung mittels Karten, insbesondere Smartcards ermöglicht einen effizienten, systemübergreifenden, aktualisierenden Abgleich von Daten betreffend authentisierte Karten, Grade von Zugangsberechtigungen (= Definition, wofür Benutzer einer Karte authentisiert ist), gegebenenfalls von zusätzlich zu einer Karte abgefragten Codes etc. über eine Verbindung, beispielsweise Netzwerke, zwischen dezentralen Steuerungseinrichtungen und einer zentralen Steuerungseinrichtung.

Die Authentisierung kann alleine aufgrund einer Karte oder alternativ durch zusätzliche Abfrage eines Codewortes erfolgen.

Ausleseeinrichtungen sind in dezentralen Steuerungen vorgesehen. Dort ist erfindungsgemäß auch eine zugangsberechtigte Karten repräsentierende Daten umfassende Datei gespeichert. Damit ist es möglich, bei Unterbrechung der Verbindung zwischen dezentralen und/oder einer zentralen Steuerungseinrichtung eine Authentisierungsprüfung seitens einer dezentralen Steuerungseinrichtung durch dortiges Auslesen einer Karte und dortige Authentisierungsprüfung aufgrund von in der dezentralen Steuerungseinrichtung gespeicherten Daten so lange durchzuführen, bis die Verbindung wieder hergestellt ist.

Karten im Sinne der Ansprüche können in unterschiedlichster Weise ausgebildet sein. Es kann sich um intelligente Smartcards oder passive, beispielsweise optisch, elektronisch oder magnetisch auslesbare Karten handeln.

Eine zentrale Steuerung im Sinne der Anmeldung ist nicht notwendigerweise eine Kopfsteuerung im steuerungstechnischen Sinn; sie kann auch ein PC sein, der z.B. an einem Büroarbeitsplatz steht und/oder der über ein Netzwerk etc. für alle dezentralen Steuerungs- PC's erreichbar ist. Dezentrale Steuerung kann insbesondere jeweils eine Steuerung an einem zu steuernden Element/Elementegruppe sein.

Weitere Merkmale und Vorteile der Erfindung ergeben sich aus den Ansprüchen und der nachfolgenden Beschreibung eines Ausführungsbeispiels anhand der Zeichnung. Dabei zeigt die einzige Figur:

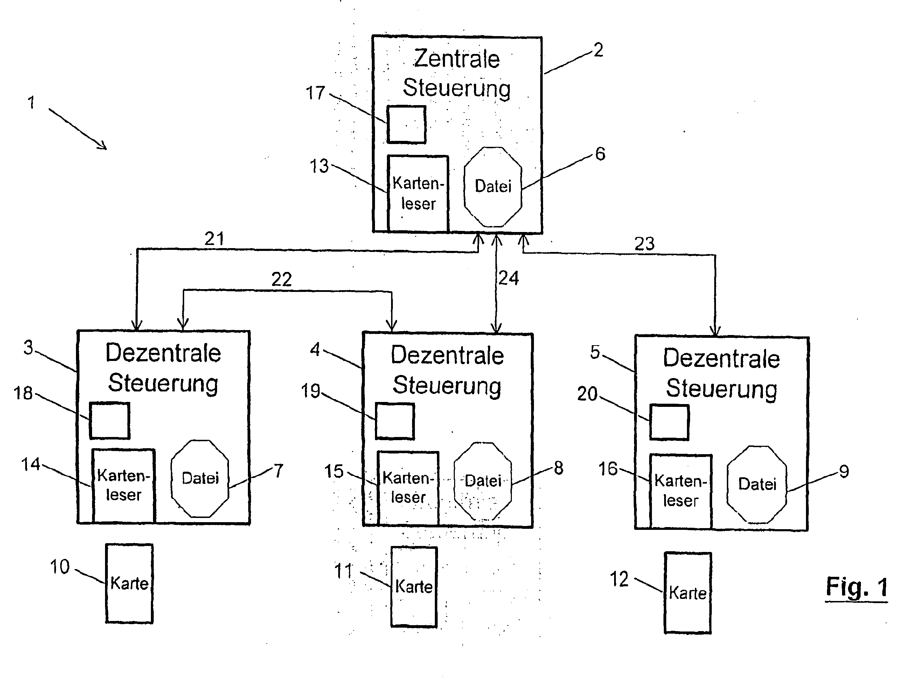

- Fig. 1: als Blockschaltbild ein erfindungsgemäßes Authentisierungssystem.

Figur 1 zeigt eine Maschinensteuerung 1 mit einer zentralen Steuerung 2 und dezentralen Steuerungen 3 bis 5. In der zentralen Steuerung 2, (sowie im vorliegenden Fall in den dezentralen Steuerungen 3 bis 5) sind Dateien 6 (sowie 7, 8, 9) in einem Speicher abgespeichert, welche Dateien Daten betreffend zugangsberechtigte Karten enthalten, also beispielsweise aus den Karten in beliebiger Weise auslesbare Identitätsdaten und für eine Karte jeweils eine Liste der für diese Karte zugelassenen Berechtigungen. Es können für alle Karten 10 bis 12 die gleichen Zugangsberechtigungen oder für mehrere Karten unterschiedliche Zugangsberechtigungen, (beispielsweise für Maschineneinsteller und Inbetriebnehmer) vorgesehen sein. In der zentralen Steuerungseinrichtung 2 und/oder in dezentralen Steuerungseinrichtungen 3 bis 5 sind schematisch angedeutete Kartenleseeinrichtungen 13, 14 bis 16 vorgesehen, mit welchen in sie eingeschobene (oder alternativ von ihnen per Funk ausgelesene) Karten 10 bis 12 ausgelesen werden.

Die aus Karten in beliebiger Weise auslesbaren Daten werden von einer Vergleichseinrichtung mit gespeicherten Daten betreffend zugangsberechtigte Karten (Datei 6, 7 bis 9) verglichen und ein Zugang wird für den Nutzer einer Karte nur in dem Umfang gewährt, wie diese Karte in einer Datei 6, 7 bis 9 abgespeichert ist. Die Vergleichseinrichtungen 17, 18 bis 20 können in einer zentralen Steuerung und/oder in dezentralen Steuerungen angeordnet sein. Wenn in dezentralen Steuerungen neben einem Kartenleser auch eine dezentrale Vergleichseinrichtung 18 bis 20 vorgesehen ist, kann autark in der dezentralen Steuerungseinrichtung 3 eine Authentisierungsprüfung erfolgen; damit ist eine Authentisierungsprüfung in der dezentralen Steuerungseinrichtung auch möglich, wenn eine Verbindung 21, 22, 23, 24 zwischen dezentralen Einrichtungen und/oder dezentralen Einrichtungen und einer Zentrale (in Form beispielsweise eines Netzwerkes, Feldbusses etc.) unterbrochen ist. Dies ermöglicht auch bei Unterbrechung der Verbindung aufgrund einer Störung eine Arbeit und/oder Wartung und/oder Inbetriebnahme etc. an einer dezentralen Einrichtung.

## Patentansprüche

1. Verfahren zur Authentisierungsprüfung für den Zugang zu einer Maschinensteuerung (1), nämlich einer Werkzeugmaschinensteuerung oder Druckmaschinensteuerung, wobei die Authentisierungsprüfung durch Auslesen und Überprüfung einer Karte (10 - 12) erfolgt, wobei mehrere unterschiedliche Grade von Zugangsberechtigungen vorgesehen sind, welche unterschiedliche Aktionen an einer Steuerungseinrichtung (2 - 5) zulassen,
**dadurch gekennzeichnet, dass**
die Maschinensteuerung (1) eine zentrale Steuerungseinrichtung (2) und mit der zentralen Steuerungseinrichtung (2) verbundene (21 - 23) dezentrale Steuerungseinrichtungen (3 - 5) umfasst, wobei die Grade von Zugangsberechtigungen in einer Datei (6) in der zentralen Steuerungseinrichtung (2) abgespeichert sind, und das Auslesen der Karte (10 - 12) für die Authentisierungsprüfung an einer dezentralen Steuerungseinrichtung (3 - 5) erfolgt, wobei in einer dezentralen Steuerungseinrichtung (3-5) die Überprüfung der Karte (10 - 12) erfolgt, wobei die Überprüfung der Karte (10 - 12) durch Vergleich von aus der Karte ausgelesenen Daten mit an der dezentralen Steuerungseinrichtung (3 - 5) in einer Datei (7 - 9) gespeicherten, zugangsberechtigte Karten (10 - 12) betreffende Daten erfolgt, wobei eine an einer dezentralen Steuerungseinrichtung (3 - 5) gespeicherte Datei (7 - 9), welche Daten betreffend zugangsberechtigte Karten enthält, mit der in der zentralen Steuerungseinrichtung (2) gespeicherten Datei (6) regelmäßig und/oder bei Änderungen einer Datei abgeglichen wird.

2. Verfahren nach Anspruch 1, **dadurch gekennzeichnet, dass** bei einem Ausfall der Verbindung (21 - 24) einer dezentralen Steuerungseinrichtung (3) mit der zentralen Steuerungseinrichtung (2) die dezentrale Steuerungseinrichtung (3 - 5) so lange eine Authentisierungsprüfung aufgrund der zuletzt vor dem Ausfall der Verbindung in ihrer Datei (7 - 9) gespeicherten Daten durchführt, bis die Verbindung (21 - 24) wiederhergestellt ist.

3. Verfahren nach einem der vorhergehenden Ansprüche,
**dadurch gekennzeichnet, dass** die Karte (10 - 12) eine Smartcard, insbesondere eine intelligente Smartcard und/oder eine Karte mit einem Speicher ist.

4. Verfahren nach einem der vorhergehenden Ansprüche,
**dadurch gekennzeichnet, dass** die Karte (10 - 12) eine magnetisch, optisch oder elektronisch auslesbare Karte ist.

5. Verfahren nach einem der vorhergehenden Ansprüche,
**dadurch gekennzeichnet, dass** bei der Authentisierungsprüfung der Karte überdies ein Codewort vom Nutzer der Karte abgefragt wird.

6. Verfahren nach einem der Ansprüche 1 bis 4, **dadurch gekennzeichnet, dass** bei der Authentisierungsprüfung der Karte kein Codewort abgefragt wird.

7. Steuerungseinrichtung für eine Maschinensteuerung (1), nämlich eine Werkzeugmaschinensteuerung oder Druckmaschinensteuerung, die eine zentrale Steuerungseinrichtung (2) und mit der zentralen Steuerungseinrichtung (2) verbundene (21 - 23) dezentrale Steuerungseinrichtungen (3 - 5) umfasst, wobei mehrere unterschiedliche Grade von Zugangsberechtigungen in einer Datei (6) in der zentralen Steuerungseinrichtung (2) abgespeichert sind
- mit einer Kartenleseeinrichtung (14 - 16) in einer dezentralen Steuerungseinrichtung zum Auslesen von Karten (10 - 12) zur Authentisierungsprüfung,
- mit einem Speicher in einer dezentralen Steuerungseinrichtung, in welchem eine Datei (7 - 9), welche Daten betreffend zugangsberechtigte Karten (10 - 12) enthält, gespeichert ist,
- mit einer Vergleichseinrichtung (18 - 20) in einer dezentralen Steuerungseinrichtung zur Authentisierungsprüfung mittels Zugangsberechtigungsmerkmalen durch Vergleichen der in der Datei (7 - 9) im Speicher gespeicherten Daten mit aus einer Karte (10 - 12) ausgelesenen Daten,
wobei die Steuerungseinrichtung so ausgebildet ist, dass ein Abgleich zwischen den in dezentralen Steuerungseinrichtungen (3 - 5) gespeicherten Dateien (7 - 9) und in der zentralen Steuerungseinrichtung (2) gespeicherten Datei (6) zyklisch und/oder bei Änderung von Daten in einer dieser Dateien (6, 7 - 9) erfolgt.

8. Steuerungseinrichtung (3 - 5) nach Anspruch 7,
**dadurch gekennzeichnet, dass** sie dezentral und so ausgebildet ist, dass sie bei Unterbrechung der Verbindung (21 - 24) zu einer zentralen Steuerungseinrichtung (2) Authentisierungsprüfungen bis zur Wiederherstellung der Verbindung (21 - 24) aufgrund der in dem Speicher gespeicherten Datei (7 - 9), welche Daten betreffend zugangsberechtigte Karten (10 - 12) enthält, ausführt.

## Claims

1. Method for verifying authentication for access to a machine controller (1), namely a machine tool controller or printing machine controller, the verification of authentication being effected by reading and checking a card (10- 12), a plurality of different degrees of access authorizations being provided which permit different actions at a controller device (2 - 5),
**characterized in that**
the machine controller (1) comprises a central controller device (2) and decentralized controller devices (3 - 5) connected (21 - 23) to the central controller device (2), the degrees of access authorizations being stored in a file (6) in the central controller device (2), and the reading of the card (10 - 12) for the verification of authentication being effected at a decentralized controller device (3 - 5), the checking of the card (10- 12) being effected in a decentralized controller device (3 - 5), the checking of the card (10 - 12) being effected by comparison of data read from the card with data which relate to access-authorized cards (10 - 12) and are stored in a file (7. - 9) at the decentralized controller device (3 - 5), a file (7- 9) which is stored at a decentralized controller device (3 - 5) and contains data relating to access-authorized cards being adjusted with the file (6) stored in the central controller device (2) regularly and/or in the event of changes to a file.

2. Method according to Claim 1, **characterized in that**, in the event of a failure of the connection (21 - 24) of a decentralized controller device (3) to the central controller device (2), the decentralized controller device (3 - 5) carries out a verification of authentication on the basis of the data stored last in its file (7 - 9) prior to the failure of the connection, until the connection (21 - 24) is reestablished.

3. Method according to one of the preceding claims,
**characterized in that** the card (10 - 12) is a smart card, in particular an intelligent smart card, and/or a card with a memory.

4. Method according to one of the preceding claims,
**characterized in that** the card (10- 12) is a card that can be read magnetically, optically or electronically.

5. Method according to one of the preceding claims,
**characterized in that** a code word is furthermore interrogated from the user of the card during the verification of authentication of the card.

6. Method according to one of Claims 1 to 4,
**characterized in that** no code word is interrogated during the verification of authentication of the card.

7. Controller device for a machine controller (1), namely a machine tool controller or printing machine controller, which comprises a central controller device (2) and decentralized controller devices (3 - 5) connected (21 -23) to the central controller device (2), a plurality of different degrees of access authorizations being stored in a file (6), in the central controller device (2),
- having a card reading device (14 - 16) in a decentralized controller device for reading cards (10 - 12) for verification of authentication,
- having a memory in a decentralized controller device, a file (7 - 9) containing data relating to access-authorized cards (10 - 12) being stored in said memory,
- having a comparison device (18 - 20) in a decentralized controller device for verification of authentication by means of access authorization features by comparison of the data stored in the file (7 - 9) in the memory with data read from a card (10-12),
the controller device being embodied such that an adjustment between the files (7 - 9) stored in decentralized controller devices (3- 5) and the file (6) stored in the central controller device (2) is effected cyclically and/or in the event of a change in data in one of said files (6, 7 - 9).

8. Controller device (3 - 5) according to Claim 7,
**characterized in that** it is decentralized and embodied such that, upon interruption of the connection (21 - 24) to a central controller device (2); it performs verifications of authentication until the reestablishment of the connection (21 - 24) on the basis of the file (7 - 9) which contains data relating to access-authorized cards (10 - 12) and is stored in the memory.

## Revendications

1. Procédé de contrôle d'authentification de l'accès à une commande de machine (1), en particulier à une commande de machine-outil ou de rotative ou similaire, le contrôle d'authentification se faisant par lecture et vérification d'une carte (10 à 12), avec plusieurs degrés différents d'autorisation d'accès qui autorisent différentes opérations sur une installation de commande (2-5),
**caractérisé en ce que**
la commande de machine (1) comprend une installation de commande centrale (2) et des installations de commande décentralisées (3 à 5) reliées (21 à 23) à l'installation de commande centrale (2), les degrés d'autorisation d'accès dans un fichier (6) sont enregistrés dans l'installation centrale (2),
la lecture de la carte (10 à 12) pour le contrôle d'authentification s'effectue dans une commande décentralisée (3 à 5) dans laquelle se fait la vérification de la carte (10 à 12) en comparant des données lues sur la carte avec des données concernant les cartes (10 à 12) ayant une autorisation d'accès et mémorisées dans un fichier (7 à 9) dans la commande décentralisée (3 à 5), et
un fichier (7-9) enregistré dans une installation de commande décentralisée (3-5) et contenant des données concernant des cartes d'accès autorisé est comparé régulièrement et/ou en cas de modifications d'un fichier, avec le fichier (6) enregistré dans l'installation centrale (2).

2. Procédé selon la revendication,
**caractérisé en ce qu'**
en cas de panne de la liaison (21 à 24) d'une commande décentralisée (3) avec la commande centrale (2), la commande décentralisée (3-5) effectue un contrôle d'authentification sur la base des données mémorisées juste avant la panne de la liaison dans ses fichiers (7-9), jusqu'à ce que cette liaison (21 à 24) soit de nouveau rétablie.

3. Procédé selon l'une des revendications précédentes,
**caractérisé en ce que**
la carte (10-12) est une Smartcard, en particulier une Smartcard intelligente et/ou une carte avec mémoire.

4. Procédé selon l'une des revendications précédentes,
**caractérisé en ce que**
la carte (10-12) peut être lue par un procédé magnétique, optique ou électronique.

5. Procédé selon l'une des revendications précédentes,
**caractérisé en ce que** lors du contrôle d'authentification de la carte, un mot de code est en outre demandé à l'usager de cette carte.

6. Procédé selon l'une des revendications 1 à 4,
**caractérisé en ce que** lors du contrôle d'authentification de la carte, aucun mot de code n'est demandé.

7. Installation de commande pour une commande de machine (1), effectivement une commande de machine-outil ou une commande de rotative d'impression, comprenant :
- une installation de commande centrale (2) et des installations de commande (3-5) décentralisées et reliées à la commande centrale (2),
- plusieurs degrés différents d'autorisations d'accès dans un fichier (6) enregistrés dans la commande centrale (2),
- un dispositif de lecture de cartes (14-16) dans une commande décentralisée pour lire les cartes (10-12) pour contrôle d'authentification,
- au moins une mémoire dans une commande décentralisée contenant un fichier (7-9) de données concernant les cartes (10 à 12) ayant une autorisation d'accès, et
- un dispositif de comparaison (18 à 20) dans une commande décentralisée pour un contrôle d'authentification à l'aide de caractéristiques d'autorisation d'accès par comparaison des données mémorisées dans le fichier (7 à 9) avec des données lues sur une carte (10 à 12),
dans laquelle l'installation de commande effectue une comparaison entre les fichiers (7 à 9) mémorisés dans des installations de commande décentralisées (3 à 5) et le fichier (6) mémorisé dans l'installation de commande centrale (2) et ce, de manière cyclique et/ou en cas de modification des données d'un fichier (6, 7 à 9).

8. Installation de commande (3-5) selon la revendication 7,
**caractérisée en ce qu'**
elle est décentralisée et conçue pour, en cas d'interruption de la' liaison (21 à 24) avec l'installation de commande centrale (2), exécuter des contrôles d'authentification sur la base des fichiers (7-9) mémorisés dans la mémoire et contenant des données concernant des cartes d'accès autorisé (10-12), jusqu'au rétablissement de la liaison (21-24).
